# EUROPÄISCHE PATENTSCHRIFT

(11) **EP 0 397 640 B1**
(45) Veröffentlichungstag und Bekanntmachung des Hinweises auf die Patenterteilung: **04.05.1994**
(21) Anmeldenummer: 90890114.3
(22) Anmeldetag: 12.04.1990
(51) Int. Cl.: H01M 10/14, H01M 2/18

(54) **Vorrichtung zum Eintaschen und Abstapeln von positiven oder negativen Platten für Akkumulatoren**
Apparatus for jacketing and stacking positive or negative accumulator plates
Dispositif pour l'enveloppement et l'empilage de plaques positives ou négatives d'accumulateurs

(30) Priorität: 10.05.1989 AT 1124/89
(43) Veröffentlichungstag der Anmeldung: 14.11.1990
(73) Patentinhaber: ELBAK Batteriewerke Gesellschaft m.b.H., A-8055 Graz-Puntigam Steiermark (AT)
(72) Erfinder: Puhm, Helmut, A-8010 Graz (Steiermark) (AT); Schwetz, Anton, A-8273 Ebersdorf (Steiermark) (AT); Kirstein, Wilhem H., A-1190 Wien (AT)
(74) Vertreter: Beer, Manfred, Dipl.-Ing.

(56) Entgegenhaltungen:
- EP-A- 0 300 991
- GB-A- 2 092 363
- US-A- 4 080 727
- US-A- 4 314 403

## Beschreibung

Die Erfindung betrifft eine Vorrichtung zum Eintaschen von positiven oder negativen Platten für Akkumulatoren mit einer Vorrichtung zum Abziehen von Separatorband von einer Vorratsspule, mit einer Schneidvorrichtung zum Ablängen der für das Eintaschen benötigten Abschnitte vom Separatorband, mit einer Vorrichtung zum Verbinden der Seitenränder des um eine Platte gefalteten Abschnittes Separatorband und gegebenenfalls mit einer im Anschluß an die Verbindungsvorrichtung vorgesehenen Vorrichtung zum Abstapeln von eingetaschten Platten.

Vorrichtungen dieser Gattung sind aus der EP-B-29 017, der EP-B-62 525 und der EP-A-300 991 bekannt. Bei diesen bekannten Vorrichtungen wird das Separatorband durch einen Kanal zugeführt und bei stillstehendem Separatorband ein von diesem abgelängter Abschnitt durch eine Platte für Akkumulatoren durch einem im Kanal vorgesehenen Querschlitz bei gleichzeitigem Falten des Abschnittes Separatorband um die Platte herausgeschoben. Die bekannten Vorrichtungen weisen auch Vorrichtungen zum Verbindungen der Seitenränder des um eine Platte gefalteten Abschnittes Separatorband auf, die mit Ultraschall arbeiten (EP-A-300 991) oder welche die Seitenränder des Abschnittes Separatorband miteinander verquetschen (EP-B-62 525).

Nachteilig bei den bekannten Vorrichtungen ist, daß die Bewegungen des Separatorbandes und der Platten von Akkumulatoren nicht gleichmäßig sind, sondern daß die Bewegungen immer wieder unterbrochen werden müssen. Dadurch ist die Leistungsfähigkeit der bekannten Maschinen begrenzt.

Der Erfindung liegt die Aufgabe zugrunde, eine Vorrichtung der eingangs genannten Gattung anzugeben, mit der beim Eintaschen von Platten für Akkumulatoren in Separatoren eine fortlaufende Bewegung sowohl des Separatorbandes, der von diesem abgelängten Abschnitte und der Platten für Akkumulatoren möglich ist.

Erfindungsgemäß wird diese Aufgabe dadurch gelöst, daß im Anschluß an die Schneidvorrichtung eine Fördervorrichtung für die abgelängten Abschnitte Separatorband vorgesehen ist, daß der Fördervorrichtung eine Vorrichtung zum Ablegen von einzutaschenden Platten auf die ungefalteten Abschnitte Separatorband zugeordnet ist, daß am abgabeseitigen Ende der Fördervorrichtung eine Umlenkvorrichtung vorgesehen ist, durch die der vor der Platte befindliche Bereich des Abschnittes Separatorband nach oben umgelenkt wird, daß im Anschluß an die umlenkvorrichtung Walzenpaare zum Zuführen der Platte mit dem gefaltetem Abschnitt Separatorband zu einer Vorrichtung zum Verbinden der Seitenränder des Abschnittes vorgesehen ist.

Vorteilhafte Ausgestaltungen der Erfindung sind Gegenstand der Unteransprüche.

Mit der erfindungsgemäßen Vorrichtung ist es möglich, größere Geschwindigkeiten zu fahren, da das Separatorband die von diesem abgelängten Abschnitte und die Platten für Akkumulatoren ohne Unterbrechung ihrer Bewegung bis zum Abstapeln der eingetaschten Platten in einer Richtung bewegt werden können. Bei der erfindungsgemäßen Vorrichtung ist der geschilderte Nachteil der bekannten Vorrichtungen, bei welchen der Separator quer zur (Blei-)Plattenbahn bewegt wird, dann zum Stillstand kommt und dann erst wieder durch ein Faltblech bzw. die (Blei-)Platte gefaltet und wieder weitertransportiert wird, vermieden. Es entfällt also das bei den bekannten Vorrichtungen erforderliche Verzögern der Bewegung des Separators bis zum Stillstand und das nachfolgende Beschleunigen desselben auf die Maschinentaktzahl. Auch der bei der bekannten Vorrichtung bestehende, einen Zeitverlust verursachende Nachteil, daß das Separatorband während des Faltens stillstehen muß und nicht nachgeführt werden kann, entsteht bei der erfindungsgemäßen Vorrichtung nicht. Die erfindungsgemäße Vorrichtung läuft überdies ruhiger und leiser als die bekannten Vorrichtungen, da keine hin- und hergehenden Massen verzögert und wieder beschleunigt werden müssen.

Weitere Einzelheiten und Merkmale der Erfindung ergeben sich aus der nachstehenden Beschreibung, der in den Zeichnungen gezeigten bevorzugten Ausführungsform.

Es zeigt:
- Fig. 1: die Gesamtvorrichtung in Seitenansicht schematisch;
- Fig. 2: den Abschnitt der Vorrichtung in dem Platten für Akkumulatoren auf Abschnitte Separatorband aufgelegt werden; und
- Fig. 3: den Abschnitt der Vorrichtung, in dem der Abschnitt Separatorband um eine Platte herumgefaltet und der Vorrichtung zum Verbinden der Seitenränder des Abschnittes Separatorband zugeführt wird.

Das Separatorband wird von einer Vorratsspule 1 über ein Umlenkrad 2 abgezogen und über eine ständig angetriebene Transportrolle 3 geführt. Gesteuert durch die Schlaufensteuerung 6, (siehe auch EP-A-300 991) und einen Sensor 7 wird eine Rolle 4 durch einen Druckmittelzylinder 5 gegen die Transportrolle 3 gedrückt. Durch die so gebildete Schlaufe aus Separatorband 8 kann das Separatorband 8 über weitere Umlenkrollen 9 und 10 in die Vorrichtung eingeführt werden.

Von der Umlenkrolle 10 gelangt das Separatorband 8 zu einer Vorrichtung 11 zum Zuführen von Separatorband 8. Diese Vorrichtung 11 besitzt ein über zwei Walzen 14 geführtes endloses Förderband 13, das perforiert ist und beispielsweise als Gewebeband ausgebildet ist. Zwischen den beiden Trumen des perforierten Förderbandes 13 ist eine Kammer 12 vorgesehen, die an ihrer an der Unterseite des oberen Trums des Förderbandes 13 anliegenden Fläche Öffnungen aufweist und die an eine Unterdruckquelle angeschlossen ist. Das Separatorband 8 wird so gegen das Förderband 13 der Vorrichtung 11 gesaugt und in eine Schneidvorrichtung 15 geschoben.

Die Schneidvorrichtung 15 besteht aus zwei gegenläufig angetriebenen Messerwellen, die je eine Schneidleiste 16 und gegenüber der Schneidleiste 16 um 180° versetzt, je eine Kerbleiste 17 aufweisen. Durch die Schneidleisten 16, die einander in der Wirkstellung etwas überlappen, wird vom Separatorband 8 ein Abschnitt 22 abgelängt. Zuvor wurde durch die Kerbleisten 17 genau in der Mitte des abzulängenden Abschnittes 22 Separatorband 8 eine Kerbe erzeugt, die an der Stelle des Abschnittes 22 liegt, um die der Abschnitt 22 später gefaltet wird. Durch die Kerbe im Abschnitt 22 Separatorband 8 wird eine größere Faltgenauigkeit erreicht und der unerwünschte "Baucheffekt" im Bereich der Faltkante des Separators vermindert.

Es besteht auch die Möglichkeit, Abschnitte 22 Separatorband 8 mit anderen Längen herzustellen, indem man die Vorschubgeschwindigkeit des Separatorbandes 8 bei gleichbleibender Drehgeschwindigkeit der Messerwellen der Schneidvorrichtung 15 wählt, was den Vorteil hat, daß sich die Maschinentaktzahl (= Drehzahl der Messerwellen) bei verschiedenen Längen von Abschnitten 22 Separatorband 8 nicht ändert. Vom Zeitpunkt des Ergreifens des Separatorbandes 8 durch die Messerwellen der Schneidvorrichtung 15 vor dem Schnitt bis zum Freiwerden staut sich Separatorband 8 vor den Messerwellen bei längeren Abschnitten 22 etwas auf. Durch eine nach der Schneidvorrichtung 15 vorgesehene Gummirolle 20, der eine von oben lose aufliegende Anpreßrolle 21 zugeordnet ist, wird das Separatorband 8 bis zum nächsten Ablängvorgang wieder geradegezogen.

Durch die erfindungsgemäße Ausbildung der Schneidvorrichtung 15 wird im Gegensatz zu dem in der EP-B-62 525 beschriebenen Querschneidevorrichtungen ein glatter Schnitt erzielt. Bei der bekannten Querschneidevorrichtung ist die Messergeschwindigkeit größer als die Vorschubgeschwindigkeit des Separatorbandes, wobei das Messer dort das Separatorband gegen eine glatte Walze abdrückt. Durch die höhere Geschwindigkeit des Messers wird der abgedrückte Separator, der noch an einigen Fasern am Separatorband hängt, abgerissen. Dabei wird das Separatorband bis zum Abreißen in unerwünschter Weise gezogen und gedehnt.

Die Rollen 20 und 21 sind am Anfang eines Rollenkettenförderers 19 angeordnet. Dabei zieht die Gummirolle 20 den Abschnitt 22 Separatorband 8 mit bei größerer Geschwindigkeit als die Bewegung der Rollenkette 19 und legt den Abschnitt 22 auf einer Leiste ab.

Von dieser Leiste wird der Abschnitt 22 durch einen Mitnehmer, der an den Rollenketten 19 montiert ist, mitgenommen. Dadurch ist gewährleistet, daß der bezogen auf die Förderrichtung hintere Rand jedes Abschnittes 22 Separatorband 8 unabhängig von der Länge dieses Abschnittes 22 bezüglich des gesamten Bewegungsablaufes in der Vorrichtung stets die gleiche Lage hat.

Von der mit Rollenketten 19 bestückten Transportvorrichtung wird der Abschnitt 22 Separatorband 8 auf eine Fördervorrichtung 29 geschoben, deren endloses, perforiertes Förderband 13 (z.B. ein Gewebeband) etwas schneller läuft als die Transportvorrichtung (Rollenketten 19), damit die auf letzterem vorgesehenen Mitnehmer hinter dem Abschnitt 22 abtauchen können.

Über der Fördervorrichtung 29 ist eine Vorrichtung 25 zum Ablegen einzutaschender Platten 24 auf die auf dem Förderband 13 der Fördervorrichtung 29, dem eine Unterdruckkammer 12 ähnlich jener der Vorrichtung 11 zugeordnet ist, abgelegt werden kann. Diese Vorrichtung 25 besitzt Gleitschienen 23, auf die eine von einem Plattenstoß vereinzelte Platte 24 durch einen Plattenleger 26 aufgelegt wird. Die auf den Gleitschienen 23 liegende Platte 24 wird von einer Vorschubvorrichtung, die zwei Endloskettenförderer mit Ketten 27 und 28, die versetzt zueinander angeordnet sind, aufweist, entlang der Gleitschienen 23 geschoben.

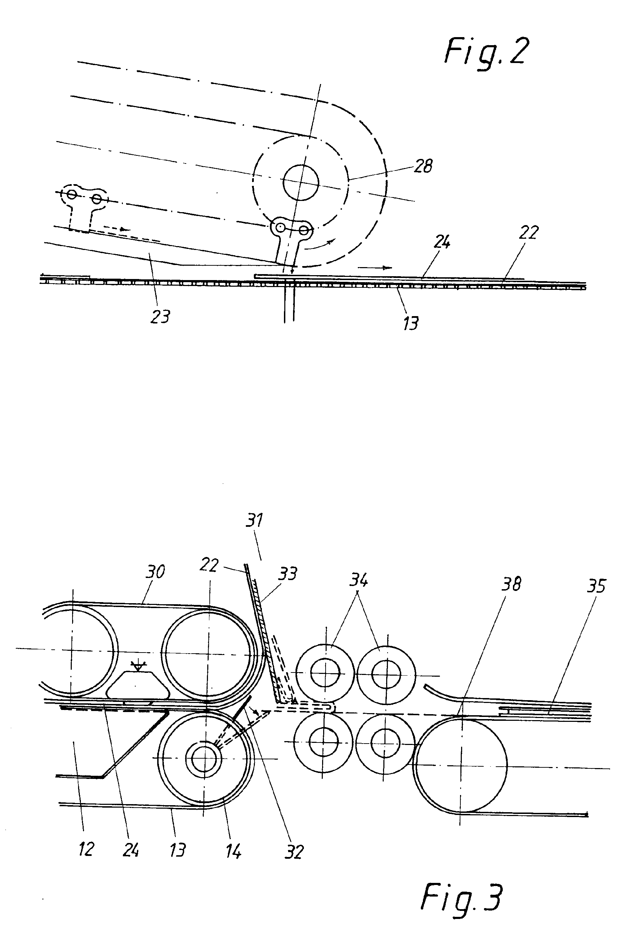

Dabei wird die Platte 24 (z.B. eine Bleiplatte) von der als Obergurtmitnehmer wirkenden Kette 27 an die als Untergurtförderer wirkende Kette 28 übergeben, welch letztere die Platte 24 ohne Geschwindigkeitsänderung auf den sich darunter vorbeibewegenden Abschnitt 22 Separatorband 8 ablegt (siehe auch Fig. 2). Dabei kommt die Platte 24 mit ihrer Fußseite genau auf die Kerblinie in der Mitte des Abschnittes 22 zu liegen, wobei die Platte 24 auf dem in Laufrichtung gesehen hinteren Bereich des Abschnittes 22 liegt.

Dem abgabeseitigen Ende der Fördervorrichtung 29 ist ein Endlosförderglied 30 zugeordnet, das als Klemmband wirkt und den Abschnitt 22 Separatorband 8 bzw. später die auf diesem auf liegende Platte 26 unverrückbar auf dem Förderband 13 der Fördervorrichtung 29 festhält.

Wie in mehr Einzelheiten in Fig. 3 gezeigt ist, ist am abgabeseitigen Ende der Fördervorrichtung 29 eine verschwenkbar gelagerte Umlenkplatte 32 einer Faltstation 31 vorgesehen, die den vorderen Teil des Abschnittes 22 nach oben umlenkt, so daß dieser an einer Leitplatte 33 nach oben gleitet. Sobald der Fußbereich der Platte 24 bei der Umlenkplatte 32 anlangt, wird diese - von der steifer als der Abschnitt 22 ausgebildeten Platte 24 - nach unten in ihre in Fig. 3 strichliert eingezeichnete Lage gedrückt und die Platte 24 wird mit um sie gefalteten Abschnitt 22 Separatorband 8 zwischen zwei Paar Klemmwalzen 34 gedrückt. Dabei kann die in der Faltstation 31 angeordnete Leitplatte 33 ebenfalls etwas in Förderrichtung verschwenken, damit der an ihr anliegende Abschnitt 22 Separatorband 8 ohne Störungen an ihr vorbeigleiten kann.

Statt der verschwenkbaren Umlenkplatte 32 kann in der Faltstation 31 auch eine Düse vorgesehen sein, aus der im richtigen Zeitpunkt ein Luftstoß austritt, der das vordere Ende des Abschnittes 22 Separatorband 8 auf die Leitplatte 33 hin umlenkt.

Da sich durch das Herumfalten des Abschnittes 22 um die Platte 24 die Länge der nunmehr zu fördernden Anordnung 35 aus Platte 24 und Abschnitt 22 um die Hälfte verkürzt, kann die Transportgeschwindigkeit in der Vorrichtung 36 zum Verbinden der Seitenränder des gefalteten Abschnittes 22 verringert sein. Dies ist von Vorteil, da die Qualität der Schweißung bei kleinerer Schweißgeschwindigkeit zunimmt. Die Anordnung 35 aus gefaltetem Abschnitt 22 und Platte 24 wird auf ein langsamer laufendes Förderband 38 geschoben und durch ein oberhalb des Förderbandes 38 vorgesehenes Klemmband 37 durch die Schweißstation 36 gefördert.

Zu beiden Seiten des Klemmbandes 37 befindet sich ein angetriebenes Amboßrad 40 mit darüber befindlicher Ultraschallschweißsonotrode 39. So werden die seitlich über die Platte 24 vorstehenden Seitenränder des thermoschweißbaren Separatorbandes 8 zwischen der Schweißsonotrode 39 und dem durch einen Druckmittelzylinder 41 dagegengedrückten Amboßrad 40 durchgezogen und mit Ultraschallschwingungen wärmeverschweißt.

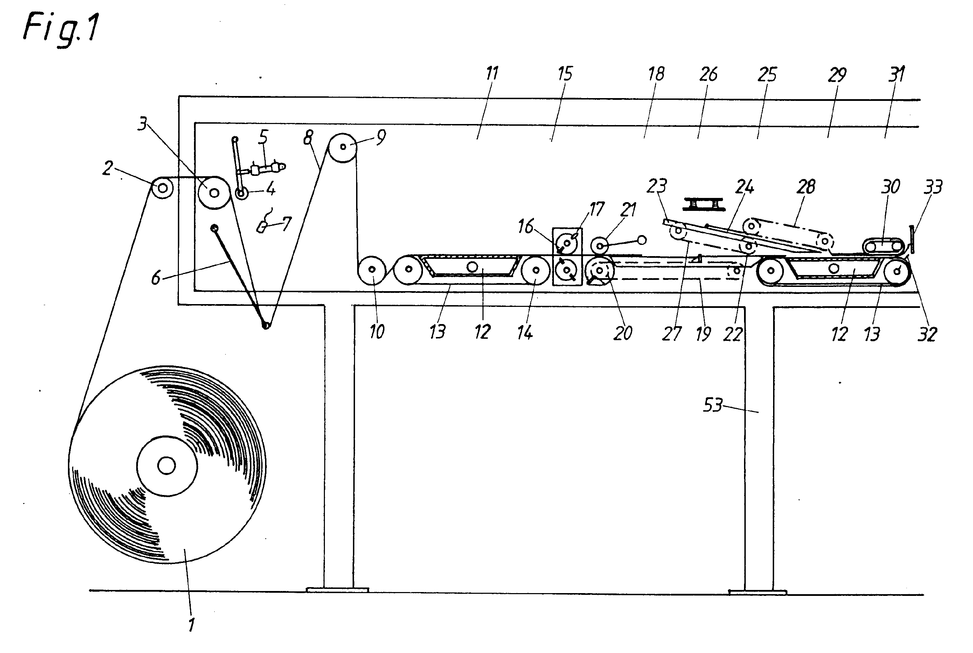

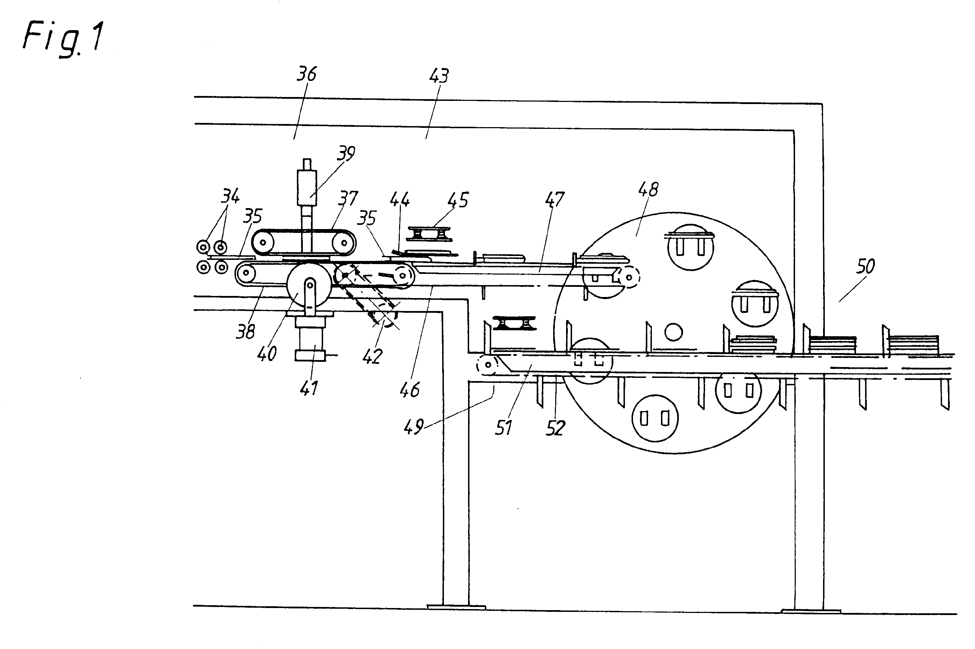

Im Anschluß an das Förderband 38 ist ein nach unten abklappbares Förderband 42 vorgesehen, das abgeklappt wird (strichlierte Lage in Fig. 1), wenn schlechtes Separator- oder Plattenmaterial ausgeschieden werden muß. Das Abklappen des Förderbandes 42 erfolgt entweder automatisch, wenn in der Maschine Einrichtungen zum Erkennen von schlechtem Separator- oder Plattenmaterial vorgesehen sind, oder wird durch eine Bedienungsperson ausgelöst.

Im Anschluß an die Schweißvorrichtung 36 ist eine Einrichtung 43 zum Auflegen von Mittelplatten mit einem Plattenleger 45 vorgesehen. Durch den Plattenleger 45 werden vereinzelte Komplementärplatten auf einen Rost 44 abgelegt. Eine Mitnehmerkette 46 (Rollenkette mit Mitnehmern) streift die auf dem Rost 44 abgelegte Platte auf die darunter befindliche eingetaschte Platte 24 ab und das Plattenpaar wird auf einer Schiene 47 in eine Abstapelvorrichtung in Form eines Scheibenrades 48 (AT-B 355 500) transportiert, wobei vom Scheibenrad 48 die Plattenpaare in einer Blocklegestation zu den gewünschten Blockgrößen zusammengelegt werden.

Am aufgabeseitigen Ende eines Blockförderbandes 50 ist ein weiterer Plattenleger 49 für Endplatten vorgesehen. Die vom Plattenleger 49 vereinzelte Endplatte wird auf eine Gleitleiste 51 gelegt und von Mitnehmern der Rollenkette 52 des Blockförderbandes in die Blocklegestation gefördert. Somit kann, wie erforderlich, als erste Platte im Block ohne zusätzliche Maßnahmen von Hand aus eine Endplatte angeordnet werden. Am abgabeseitigen Ende des Blockförderers 50 werden die taktweise von der Rollenkette 52 mit Mitnehmern transportierten Blöcke aus der Maschine entnommen und der weiteren Verarbeitung zugeführt.

## Patentansprüche

1. Vorrichtung zum Eintaschen von positiven oder negativen Platten (24) für Akkumulatoren mit einer Vorrichtung (3, 4, 6) zum Abziehen von Separatorband (8) von einer Vorratsspule (1), mit einer Schneidvorrichtung (15) zum Ablängen der für das Eintaschen benötigten Abschnitte (22) vom Separatorband (8), mit einer Vorrichtung (36) zum Verbinden der Seitenränder des um eine Platte (24) gefalteten Abschnittes (22) Separatorband (8) und gegebenenfalls mit einer im Anschluß an die Verbindungsvorrichtung (36) vorgesehenen Vorrichtung (48) zum Abstapeln von eingetaschten Platten (24), dadurch gekennzeichnet, daß im Anschluß an die Schneidvorrichtung (15) eine Fördervorrichtung (29) für die abgelängten Abschnitte (22) Separatorband (8) vorgesehen ist, daß der Fördervorrichtung (29) eine Vorrichtung (25) zum Ablegen von einzutaschenden Platten (24) auf die ungefalteten Abschnitte (22) Separatorband (8) zugeordnet ist, daß am abgabeseitigen Ende der Fördervorrichtung (29) eine Umlenkvorrichtung (31, 32, 33) vorgesehen ist, durch die der vor der Platte (24) befindliche Bereich des Abschnittes (22) Separatorband (8) nach oben umgelenkt wird, daß im Anschluß an die Umlenkvorrichtung (31, 32, 33) Walzenpaare (34) zum Zuführen der Platte (24) mit dem gefalteten Abschnitt (22) Separatorband (8) zu einer Vorrichtung (36) zum Verbinden der Seitenränder des Abschnittes (22) vorgesehen ist.

2. Vorrichtung nach Anspruch 1, dadurch gekennzeichnet, daß eine Vorrichtung (11) zum Zuführen von Separatorband (8) ein mit Unterdruck beaufschlagtes, perforiertes endloses Förderband (13) aufweist, die Separatorband (8) der Schneidvorrichtung (15) zuführt.

3. Vorrichtung nach Anspruch 2, dadurch gekennzeichnet daß zum Beaufschlagen des Förderbandes (13) mit Unterdruck eine nach oben gerichtete Öffnungen aufweisende Kammer (12) vorgesehen ist, die zwischen den beiden Trumen des Förderbandes (13) angeordnet ist und die an eine Unterdruckquelle angeschlossen ist.

4. Vorrichtung nach einem- der Ansprüche 1 bis 3, dadurch gekennzeichnet, daß die Schneidvorrichtung (15) zwei mit Schneidleisten (16) bestückte einander gegenüberliegende Walzen aufweist, zwischen denen das Separatorband (8) durchgeführt ist.

5. Vorrichtung nach Anspruch 4, dadurch gekennzeichnet, daß an den Walzen den Schneidleisten (16) gegenüberliegend Kerbleisten (17) zum Erzeugen von Kerbstellen im Bereich der später zwerzeugenden Faltlinie im Abschnitt (22) Separatorband (8) angeordnet sind.

6. Vorrichtung nach einem der Ansprüche 1 bis 5, dadurch gekennzeichnet, daß im Anschluß an die Schneidvorrichtung (15) ein Fördermittel (19) zum vereinzelten Vorschieben von Abschnitten (22) Separatorband (8) zur Fördervorrichtung (29) für Abschnitte (22) Separatorband (8) vorgesehen ist.

7. Vorrichtung nach Anspruch 6, dadurch gekennzeichnet, daß das Fördermittel eine Förderkette (19) mit wenigstens einem, vorzugsweise zwei an der in Förderrichtung gesehen hinteren Kante des Abschnittes (22) Separatorband (8) angreifenden Fördervorsprung ist, wobei der Fördervorsprung z.B. eine Mitnehmerleiste den Abschnitt (22) Separatorband (8) von einer nach der Schneidvorrichtung (15) angeordneten Auflage, auf die er von Transportrollen (20, 21) geschoben wurde, weggeschoben wird.

8. Vorrichtung nach einem der Ansprüche 1 bis 7, dadurch gekennzeichnet, daß die Fördervorrichtung (29) ein mit Unterdruck beaufschlagtes, perforiertes, endloses Förderband (13) aufweist, auf dem Abschnitte (22) Separatorband (8) flach aufliegend gefördert werden.

9. Vorrichtung nach Anspruch 8, dadurch gekennzeichnet, daß zum Beaufschlagen des Förderbandes (13) eine nach oben gerichtete Öffnungen aufweisende Kammer (12) vorgesehen ist, die zwischen den Trumen des Förderbandes (13) angeordnet und die an eine Unterdruckquelle angeschlossen ist.

10. Vorrichtung nach einem der Ansprüche 1 bis 9, dadurch gekennzeichnet, daß die Vorrichtung (25) zum Ablegen von Platten (24) auf Abschnitte (22) Separatorband (8) zur Fördervorrichtung (29) hin von oben schräg abfallende Gleitschienen (23) für die abzulegenden Platten (24) aufweist, über deren der Fördervorrichtung (29) benachbarten Ende ein Untergurtförderer (28) mit wenigstens einem Mitnehmer zum taktweisen Ablegen einer Platte (24) auf einen Abschnitt (22) Separatorband (8) angeordnet ist.

11. Vorrichtung nach einem der Ansprüche 1 bis 10, dadurch gekennzeichnet, daß neben dem abgabeseitigen Ende der Fördervorrichtung (29) eine Umlenkvorrichtung in Form einer verschwenkbar gelagerten Umlenkplatte (32), die in ihre Ruhelage, in der sie in den Förderweg eines Abschnittes (22) mit aufgelegter Platte (24) ragt, belastet ist, oder wenigstens eine Düse mit zur Förderrichtung im wesentlichen senkrechter Achse der Austrittsöffnung vorgesehen ist, daß über dem abgabeseitigen Ende der Fördervorrichtung (29) ein von oben an einer auf dem Abschnitt (22) bzw. der auf einem Abschnitt (22) Separatorband liegenden Platte (24) angreifendes Endlosförderglied (30) vorgesehen ist, und daß neben dem abgabeseitigen Ende des Endlosfördergliedes (30) eine Leitplatte (33) angeordnet ist, an welcher der nach oben umgelenkte, vordere Bereich eines Abschnittes (22) Separatorband (8) nach oben gleitet.

12. Vorrichtung nach einem der Ansprüche 1 bis 11, dadurch gekennzeichnet, daß die Vorrichtung (36) zum Verbinden der Seitenränder des um eine Platte (24) gefalteten Abschnittes (22) Separatorband (8) als Ultraschallschweißvorrichtung ausgebildet ist.

13. Vorrichtung nach einem der Ansprüche 1 bis 12, dadurch gekennzeichnet, daß nach der Vorrichtung zum Verbinden der Seitenränder des um eine Platte (24) gefalteten Abschnitt (22) Separatorband (8) eine Vorrichtung (43, 45) zum Auflegen von Mittelplatten auf die auf einem Fördermittel (46) geförderten, eingetaschten Platten (24) vorgesehen ist.

14. Vorrichtung nach Anspruch 13, dadurch gekennzeichnet, daß dem abgabeseitigen Ende des Fördermittels (46) eine Vorrichtung (48), vorzugsweise ein Scheibenrad zum Bilden von Stapeln aus positiven, negativen und Mittelplatten, auf einer intermittierend angetriebenen Abfördereinrichtung zugeordnet ist.

15. Vorrichtung nach einem der Ansprüche 1 bis 14, dadurch gekennzeichnet, daß dem aufgabeseitigen Ende einer Abfördereinrichtung (50) für Plattenstapel eine Vorrichtung (49) zum Ablegen von Endplatten auf das Förderglied (51) der Abfördereinrichtung (50) zugeordnet ist.

16. Vorrichtung nach einem der Ansprüche 1 bis 15, dadurch gekennzeichnet daß im Anschluß an die Schneidvorrichtung (15) eine Förderrolle (20), der gegebenenfalls eine Druckrolle (21) zugeordnet ist, vorgesehen ist, durch die ein Abschnitt (22) Separatorband (8) auf eine ortsfeste Auflage gefördert wird, und daß eine mit wenigstens einer Mitnehmerleiste bestückte Transportvorrichtung (18) vorgesehen ist, durch die der Abschnitt (22) Separatorband (8) von der Auflage zur Fördervorrichtung (29) transportiert wird.

## Claims

1. Device for jacketing positive or negative accumulator plates (24), having a device (3, 4, 6) for pulling off separator strip (8) from a supply roll (1), a cutting device (15) for cutting to length the sections (22) of the separator strip (8) which are necessary for the jacketing process, having a device (36) for connecting the side edges of the section (22) of the separator strip (8) folded about a plate (24), and, optionally, having a device (48), which is following the connection device (36), and is for stacking jacketed plates (24), characterised in that there is provided, following the cutting device (15), a conveyor device (29) for the sections (22) of separator strip (8) which have been cut to length; in that the conveyor supply device (29) is associated with a device (25) for depositing plates (24) to be jacketed on the unfolded sections (22) of separator strip; in that, at the output end of the conveyor device (29) there is provided a deflection device (31, 32, 33), by means of which the area of the section (22) of separator strip (8) that is located in front of the plate (24) is deflected upwards; in that there are provided, following the deflection device (31, 32, 33), pairs of rollers (34) for delivering the plate (24) with the folded section (22) of separator strip (8) to a device (36) for connecting the side edges of the section (22).

2. Device according to Claim 1, characterised in that a device (11) for delivering separator strip (8) comprises a perforated endless conveyor belt (13) which is acted upon by negative pressure and which delivers the separator strip (8) to the cutting device (15).

3. Device according to Claim 2, characterised in that a chamber (12) which has an upwardly directed apertures,which is disposed between both runs of the conveyor belt (13), and which is connected to a negative pressure source is provided in order to act on the conveyor belt with negative pressure.

4. Device according to any one of Claims 1 to 3, characterised in that the cutting device (15) comprises two rollers, which are opposite one another, which are provided with cutting bars (16), and between which the separator strip (8) is conducted.

5. Device according to Claim 4, characterised in that scoring bars (17) opposite the cutting bars (16) on the rollers are arranged to produce scored locations in the vicinity of the folded line to be formed later in the section (22) of separator strip (8).

6. Device according to any one of Claims 1 to 5, characterised in that there is provided, following the cutting device (15), a conveyor means (19) for advancing sections (22) of separator strip (8) individually to the conveyor device (29) for sections (22) of separator strip (8).

7. Device according to Claim 6, characterised in that the conveyor means is a conveyor chain (19) having at least one and preferably two conveyor projections acting on the rear edge of the section (22) of separator strip (8) viewed in the conveyor direction, whereas the conveyor projection, for example an entraining bar, urges the section (22) of separator strip (8) away from a support which is disposed after the cutting device (15), onto which it was urged by transporting roller (20, 21).

8. Device according to any one of Claims 1 to 7, characterised in that the conveyor device (29) comprises a perforated endless conveyor belt (13) which is acted upon with negative pressure and on which sections (22) of separator strip (8) are transported such that they lie flat.

9. Device according to Claim 8, characterised in that a chamber (12), comprising upwardly directed apertures, is provided to act upon the conveyor belt (13) which chamber is disposed between the runs of the conveyor belt (13) and adjoins a negative pressure source.

10. Device according to any one of Claims 1 to 9, characterised in that the device (25) for depositing plates (24) on sections (22) of separator strip (8) comprises slide rails (23) inclined downwards towards the conveyor device (29) for the plates (24) to be deposited, above whose end which is adjacent the conveying device a lower conveyor belt (28) is disposed with at least one entraining means for the timed depositing of a plate (24) onto the section (22) of separator strip (8).

11. Device according to one of Claims 1 to 10, characterised in that there is provided, adjacent the end of the conveyor device (29) that is on the depositing side, a deflection device in the form of a pivotably mounted deflection plate (32), which is loaded in its rest position, in which it projects into the conveying path of a section (22) carrying a plate (24), or at least a nozzle, the axis of the outlet opening of which is substantially perpendicular to the conveyor device; in that there is provided, above the end on the depositing side of the conveyor device (29), an endless conveyor member (30), which acts from above on a plate (24) lying on the section (22) or the plate lying on a section (22) of separator strip; and in that, adjacent to the depositing side end of the endless conveyor member (30) there is disposed a conducting plate (33), on which the upwardly directed front part, of a section (22) of separator strip (8) slides upwards.

12. Device according to any one of Claims 1 to 11, characterised in that the device (36) for connecting the side edges of the section (22) of separator strip folded about a plate (24) is formed as an ultrasound welding device.

13. Device according to any one of Claims 1 to 12, characterised in that the device for connecting the side edges of the section (22) of separator strip (8) folded about a plate (24) is provided with a device (43, 45) for placing central plates on the jacketed plates (24) that are being conveyed on a conveyor means (46) following the device for connecting the side edges.

14. Device according to Claim 13, characterised in that a device (48), preferably a disc wheel, for forming stacks of positive, negative and central plates on an intermittently driven removing device, is associated with the output side end of the conveyor means (46).

15. Device according to any one of Claims 1 to 14, characterised in that a device (49) for depositing end plates on the conveyor member (51) of the removal device (50) is associated with the feeding side end of a removal device (50).

16. Device according to any one of Claims 1 to 15, characterised in that there is provided, following the cutting device (15), a conveyor roller (20), which is optionally associated with a pressure roller (21), by means of which conveyor roller a section (22) of separator strip (8) is conveyed on a stationary support; and in that a transport device (18) with at least one entrainment strip is provided, by means of which device the section (22) of separator strip (8) is transported from the support to the conveyor device (29).

## Revendications

1. Dispositif pour l'enveloppement de plaques positives ou négatives (24) pour accumulateurs, comprenant un dispositif (3,4,6) pour le tirage d'une bande séparatrice (8) d'une bobine de stockage (1), un dispositif de coupe (15) pour la coupe de la bande séparatrice (8) en tronçons (22) nécessaires à l'enveloppement, un dispositif (36) pour la liaison des bords latéraux des tronçons (22) de la bande séparatrice (8) pliés autour des plaques (24) et éventuellement un dispositif (48) prévu après le dispositif de liaison (36) pour l'empilement des plaques (24) enveloppées, caractérisé en ce qu'il est prévu à la suite du dispositif de coupe (15) un dispositif de transport (29) pour les tronçons (22) détachés de la bande séparatrice (8), en ce qu'avec le dispositif de transport (29) est disposé un dispositif (25) pour le dépôt des plaques à envelopper (24) sur les tronçons dépliés (22) de bande séparatrice (8), en ce qu'il est prévu à l'extrémité de sortie du dispositif de transport (29) un dispositif de déviation (31, 32,33) par lequel la région se trouvant avant la plaque (24) du tronçon (22) de bande séparatrice (8) est déviée vers le haut, en ce qu'il est prévu à la suite du dispositif de déviation (31,32,33) des paires de rouleaux (34) pour la conduite de la plaque (24) avec le tronçon plié (22) de bande séparatrice (8) à un dispositif (36) pour la liaison des bords latéraux du tronçon (22).

2. Dispositif selon la revendication 1, caractérisé en ce qu'un dispositif (11) pour la conduite de la bande séparatrice (8) comprend une bande transporteuse sans fin,perforée (13), à laquelle est appliquée une dépression qui conduit la bande séparatrice (8) au dispositif de coupe (15).

3. Dispositif selon la revendication 2, caractérisé en ce que, pour l'application à la bande transporteuse (13) d'une dépression, il est prévu une chambre (12) présentant des ouvertures tournée vers le haut, qui est disposée entre les deux brins de la bande transporteuse (13) et qui est raccordée à une source de dépression.

4. Dispositif selon l'une des revendications 1 à 3, caractérisé en ce que le dispositif de coupe (15) comprend deux rouleaux opposés avec des lames de coupe (16), entre lesquels est conduite la bande séparatrice (8).

5. Dispositif selon la revendication 4, caractérisé en ce que sur les rouleaux se trouvent à l'opposé des lames de coupe (16) des lames d'entaille (17) pour la réalisation de lignes d'entailles, dans la région de la ligne de pliage ultérieure, dans le tronçon (22) de bande séparatrice (8).

6. Dispositif selon l'une des revendications 1 à 5, caractérisé en ce qu'il est prévu à la suite du dispositif de coupe (15) un moyen de transport (19) pour l'avance séparée des tronçons (22) de bande séparatrice (8) vers le dispositif de transport (29) des tronçons (22) de bande séparatrice (8).

7. Dispositif selon la revendication 6, caractérisé en ce que le moyen de transport est un transporteur à chaîne (19) avec au moins une saillie de transport, et de préférence deux, agissant sur le bord postérieur, dans le sens de transport, du tronçon (22) de bande séparatrice (8), la saillie de transport, par exemple une baguette d'entraînement, éloignant le tronçon (22) de bande séparatrice (8) d'un support placé après le dispositif de coupe (15) sur lequel il a été conduit par des rouleaux de transport (20,21).

8. Dispositif selon l'une des revendications 1 à 7, caractérisé en ce que le dispositif de transport (29) comprend une bande transporteuse sans fin (13) perforée, à laquelle est appliquée une dépression, sur laquelle des tronçons (22) de bande séparatrice (8) sont transportés en étant placés à plat.

9. Dispositif selon la revendication 8, caractérisé en ce que, pour l'application d'une dépression à la bande transporteuse (13), il est prévu une chambre (12), ayant des ouvertures tournées vers le haut, qui est placée entre les brins de la bande transporteuse (13) et raccordée à une source de dépression.

10. Dispositif selon l'une des revendications 1 à 9, caractérisé en ce que le dispositif (25) pour la pose de plaques (24) sur des tronçons (22) de bande séparatrice (8) comprend des rails de glissement (23) descendant obliquement d'en haut vers le dispositif de transport (29) pour les plaques (24) à poser, et à l'extrémité de ces rails voisine du dispositif de transport (29) est placé un transporteur de retour (28) avec au moins un organe d'entraînement pour la pose cadencée d'une plaque (24) sur un tronçon (22) de bande séparatrice (8).

11. Dispositif selon l'une des revendications 1 à 10, caractérisé en ce qu'il est prévu à côté de l'extrémité de sortie du dispositif de transport (29) un dispositif de déviation en forme de plaque déflectrice (32) montée de façon à pouvoir pivoter et qui est chargée,à sa position de repos à laquelle elle est dressée sur le trajet de transport d'un tronçon (22) avec une plaque (24) posée sur lui, ou au moins une buse dont l'ouverture de sortie a un axe sensiblement orthogonal à la direction de transport, en ce qu'il est prévu au-dessus de l'extrémité de sortie du dispositif de transport (29) un organe de transport sans fin (30) agissant par le haut sur un des tronçons (22) ou sur une plaque (24) se trouvant sur un tronçon (22) de bande séparatrice, et en ce qu'il est prévu près de l'extrémité de sortie de l'organe de transport sans fin (30) une plaque de guidage (33) au contact dc laquelle la zone antérieure, déviée vers le haut, d'un tronçon (22) de bande séparatrice (8), glisse vers le haut.

12. Dispositif selon l'une des revendications 1 à 11, caractérisé en ce que le dispositif (36) pour la liaison des bords latéraux du tronçon (22) de bande séparatrice (8) pliée autour d'une plaque (24) est constitué par un dispositif de soudage à ultrasons.

13. Dispositif selon l'une des revendications 1 à 12, caractérisé en ce qu'il est prévu, après le dispositif pour la liaison des bords latéraux d'un tronçon (22) de bande séparatrice (8) pliée autour d'une plaque (24),un dispositif (43,45) pour la pose de plaques centrales sur les plaques (24) enveloppées, transportées sur un moyen de transport (46).

14. Dispositif selon la revendication 13, caractérisé en ce qu'est disposé à l'extrémité de sortie du moyen de transport (46) un dispositif (48), de préférence une roue analogue à un disque, pour la formation de piles de plaques positives, négatives et centrales sur un dispositif d'évacuation à entraînement intermittent.

15. Dispositif selon l'une des revendications 1 à 14, caractérisé en ce qu'est disposé à l'extrémité d'entrée d'un dispositif d'évacuation (50) des piles de plaques un dispositif (49) pour la pose de plaques extrêmes sur l'organe de transport (51) du dispositif d'évacuation (50).

16. Dispositif selon l'une des revendications 1 à 15, caractérisé en ce qu'il est prévu à la suite du dispositif de coupe (15) un rouleau de transport (20) auquel correspond éventuellement un rouleau presseur (21), par lequel un tronçon (22) de bande séparatrice (8) est déplacé sur un support fixe, et en ce qu'il est prévu un dispositif de transport (18) comprenant au moins une barrette d'entraînement par laquelle le tronçon (22) de bande séparatrice (8) est déplacé du support au dispositif de transport (29).
